# EUROPÄISCHE PATENTANMELDUNG

(11) **EP 0 758 727 A2**
(43) Veröffentlichungstag der Anmeldung: **19.02.1997**
(21) Anmeldenummer: 96112601.8
(22) Anmeldetag: 05.08.1996
(51) Int. Cl.: F16H 61/42, B60K 28/00

(54) **Hydrostatisches Getriebe für ein Fahrzeug mit einem Steuergestänge**

(30) Priorität: 11.08.1995 US 514279
(71) Anmelder: DEERE & COMPANY, Moline Illinois 61265-8098 (US)
(72) Erfinder: Wanie, Lee Joseph, Horicon, Wisconsin 53031 (US)
(74) Vertreter: Feldmann, Bernhard

(57) **Zusammenfassung**

Ein hydrostatisches Fahrzeuggetriebe (12) wird über jeweils ein Pedal (16, 17) in seine Stellung für Vorwärts- und Rückwärtsfahrt verstellt und kann über ein Steuergestänge (10) in seine Neutralstellung zurückgeführt werden, wenn das Pedal in seine Ausgangsstellung zurückkehrt. Das Steuergestänge (10) weist Schalter (40, 42) auf, die mit der Fahrzeugelektrik derart verdrahtet sind, daß der Fahrzeugmotor nur angelassen werden kann, wenn sich das Getriebe (12) in seiner Neutralstellung befindet.

## Beschreibung

Die Erfindung bezieht sich auf ein hydrostatisches Getriebe für ein Fahrzeug, das über eine Steuerwelle aus einer Neutralstellung in eine Stellung für Fahrt in eine Richtung und in eine Stellung für Fahrt in die entgegengesetzte Richtung schaltbar ist und ein Steuergestänge aufweist, über das das Getriebe aus seinen Fahrtstellungen in seine Neutralstellung rückführbar ist, wobei das Steuergestänge einen ersten mit der Steuerwelle verbundenen Schwenkarm, einen zweiten zu dem ersten Schwenkarm in einem Winkel angeordneten Schwenkarm mit einem ersten und einem zweiten Langloch, einem ersten an dem ersten Schwenkarm vorgesehenen und in dem ersten Langloch geführten Eingreifteil, einen zweiten fahrzeugfesten und den zweiten Schwenkhebel in dem zweiten Langloch führenden Eingreifteil und ein den ersten und den zweiten Schwenkarm derart verbindendes Federelement aufweist, daß das Steuergestänge in der Neutralstellung eine Stellung, in der der erste und der zweite Eingreifteil an den Enden des ersten und zweiten Langloches anliegt, in der Stellung für Fahrt in die eine Richtung eine Stellung, in der der erste Eingreifteil von dem Ende des zugehörigen ersten Langloches weggeschwenkt und in der der zweite Eingreifteil gegen das Ende des zugehörigen zweiten Langloches anliegt, und in der Stellung für Fahrt in die entgegengesetzte Richtung eine Stellung einnimmt, in der der erste Eingreifteil gegen das Ende des zugehörigen ersten Langloches anliegt und in der der zweite Eingreifteil nicht mehr gegen das Ende des zugehörigen zweiten Langloches anliegt.

Dieses hydrostatische Getriebe (Gravely Promaster 400 Series) ist Bestandteil eines Sitzrasenmähers, und die Drehrichtung für eine die Antriebsräder aufweisende Ausgangswelle wird durch ein über einen Fuß einstellbares Pedal bestimmt. Wird das Pedal nach vorne geschwenkt, so nimmt das Getriebe eine Drehrichtung für Vorwärtsfahrt ein. Wird das Pedal nach rückwärts geschwenkt, so wird das Getriebe in eine Stellung für Rückwärtsfahrt verstellt. In der Ruhestellung des Pedals wird das Getriebe über das Steuergestänge in seine Neutralstellung zurückgeführt. Da der zweite Eingreifteil an einer fahrgestellfesten aber einstellbaren Stange vorgesehen ist, läßt sich das Steuergestänge in seiner Neutralstellung derart einstellen, daß es stets auf die präzise Neutralstellung des Getriebes, in der ein Fahrbetrieb nicht möglich ist, abgestimmt ist.

Die mit der Erfindung zu lösende Aufgabe wird darin gesehen, dieses Getriebe nur anlassen zu können, wenn es sich in seiner Neutralstellung befindet. Hierzu sieht die Erfindung vor, daß der zweite Schwenkarm mit einem ersten und einem zweiten Schalter versehen ist, die mit der Fahrzeugelektrik derart verbunden sind, daß ein Anlassen des Fahrzeuges nur möglich ist, wenn der erste und der zweite Eingreifteil gegen die Enden des zugehörigen ersten und zweiten Langloches anliegt. Da sich sofort ein Abstand zwischen einem der Eingreifteile und dem Ende seines zugehörigen Langloches einstellt, wenn sich das Getriebe nicht mehr in seiner Neutralstellung befindet, ist ein Anlassen des Fahrzeuges nicht möglich, wenn es eine seiner Fahrtstellungen einnimmt. Diese Sicherheitseinrichtung ist mit äußerst einfachen Mitteln verwirklicht. Zweckmäßig können dabei die Schalter als Druckschalter ausgebildet und durch die Eingreifteile betätigbar sein, wobei einer der Eingreifteile einstellbar ist.

In der Zeichnung ist ein nachfolgend näher erläutertes Ausführungsbeispiel der Erfindung dargestellt. Es zeigt:
- Fig. 1: ein hydrostatisches Getriebe mit zugehörigem Steuergestänge in der Neutralstellung,
- Fig. 2: das hydrostatische Getriebe nach Fig. 1 in der Stellung für Vorwärtsfahrt,
- Fig. 3: das hydrostatische Getriebe nach Fig. 1 in der Stellung für Rückwärtsfahrt und
- Fig. 4: einen einstellbaren Eingreifteil in Form eines Führungszapfens.

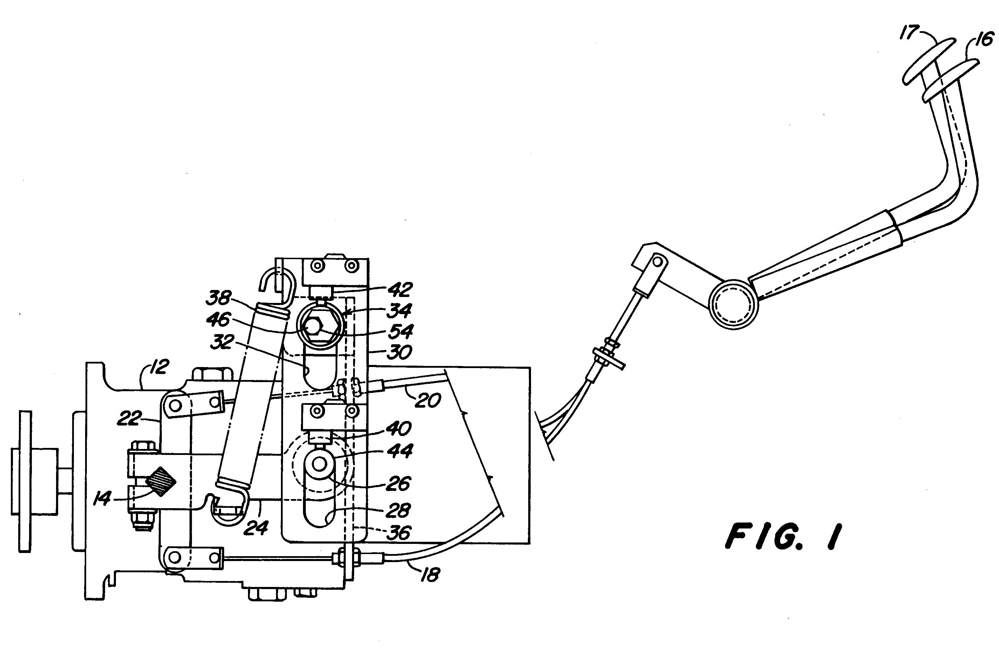

In den Fig. 1 bis 3 der Zeichnung ist ein fußbetätigbares Steuergestänge 10 zum Verstellen eines hydrostatischen Getriebes 12 in seinen verschiedenen Stellungen dargestellt. Das hydrostatische Getriebe 12 gehört zu einem nicht dargestellten Fahrzeug, insbesondere zu einem beispielsweise in der Rasenpflege einsetzbaren Kleinschlepper und ist mit einer Steuerwelle 14 versehen. Die Steuerwelle 14 wird durch das Steuergestänge 10 aus ihrer Neutralstellung im Uhrzeigerdrehsinn oder entgegen dem Uhrzeigerdrehsinn verstellt, und je nach der Stellung der Steuerwelle 14 kann das Fahrzeug vorwärts oder rückwärts fahren. Gleichzeitig läßt sich auch die Fahrgeschwindigkeit einstellen. Die Verstellung des Steuergestänges 10 erfolgt über zwei Pedale 16 und 17, die an einem Bedienungsstand des Fahrzeuges in bekannter Weise vorgesehen sind. Hierzu sind die beiden Pedale mit je einem Bowdenzug 18 und 20 verbunden, deren anderes Ende an dem oberen bzw. an dem unteren Ende eines an die Steuerwelle 14 angeschlossenen Stellhebels 22 angreift. Durch ein Heruntertreten des Pedals 16 wird der Stellhebel 22, da der zugehörige Bowdenzug 18 an dessen unteren Ende angreift, entgegen dem Uhrzeigerdrehsinn und die Steuerwelle 14 in eine Stellung für Vorwärtsfahrt verstellt. Durch ein Heruntertreten des Pedals 17 wird der Stellhebel 22, da der zugehörige Bowdenzug 20 an dessen oberen Ende angreift, im Uhrzeigerdrehsinn und die Steuerwelle 14 in eine Stellung für Rückwärtsfahrt verstellt. Kehren die Pedale in ihre Ausgangsstellungen zurück, so wird der Stellhebel 22 in seine Vertikalstellung und die Steuerwelle 14 in ihre Neutralstellung zurückgeführt. Diese ist in Fig. 1 gezeigt. Wie das Zurückführen im einzelnen erfolgt, wird nachfolgend erläutert.

Zu dem Steuergestänge 10 gehört ein Schwenkarm 24, der an seinem einen Ende mit dem Stellhebel 22 und mit der Steuerwelle 14 fest verbunden ist. An seinem anderen Ende ist der Schwenkarm 24 mit einem Eingreifteil oder Führungszapfen 26 versehen, der ein erstes Langloch 28 in einem zweiten Schwenkarm 30 oder einer Stellplatte durchsetzt bzw. in diesem verstellbar ist. Der zweite Schwenkarm 30 ist hochstehend angeordnet und sein erstes Langloch 28 befindet sich im Bereich seines unteren Endes. Oberhalb des ersten Langloches 28 ist im Bereich des oberen Endes des zweiten Schwenkarms 30 ein zweites Langloch 32 vorgesehen. Ein zweiter Eingreifteil oder Führungszapfen 34 ist an einer ortsfesten Platte 36 odgl., die an das Getriebegehäuse oder an einem anderen Fahrzeugteil angeflanscht ist, angeordnet und durchsetzt das zweite Langloch 32. Der zweite Schwenkarm 30 ist auf dem zweiten Führungszapfen 34 verschiebbar. Zwischen dem oberen Ende des zweiten Schwenkarms 30 und etwa der Mitte des ersten Schwenkarms 24 ist noch eine Zugfeder 38 gespannt. Außerdem ist der zweite Schwenkarm 30 noch mit zwei Schaltern 40 und 42 ausgerüstet, die sich jeweils im Bereich der oberen Enden der beiden Langlöcher 28 und 30 befinden. Die beiden Schalter 40 und 42 gehören zu einem Starterstromkreis und werden durch die beiden Führungszapfen 26 und 34 betätigt. Die Schalter verhindern ein Anlassen des Fahrzeuges, wenn sich das hydrostatische Getriebe nicht in seiner Neutralstellung befindet. Man erkennt in der in Fig. 1 gezeigten Neutralstellung, daß die beiden Führungszapfen 26 und 34 die Schaltelemente der Schalter berühren. In der Neutralstellung hängt der zweite Schwenkarm 30 auf dem zweiten Führungszapfen 34 und der erste Führungszapfen 26 liegt gegen das obere Ende 44 des ersten Langloches 28 an. Damit sich bei einer derartigen Konstellation auch die Steuerwelle 14 in einer Stellung befindet, in der das Getriebe 12 seine Neutralstellung einnimmt, ist der obere und/oder der untere Führungszapfen verstellbar.

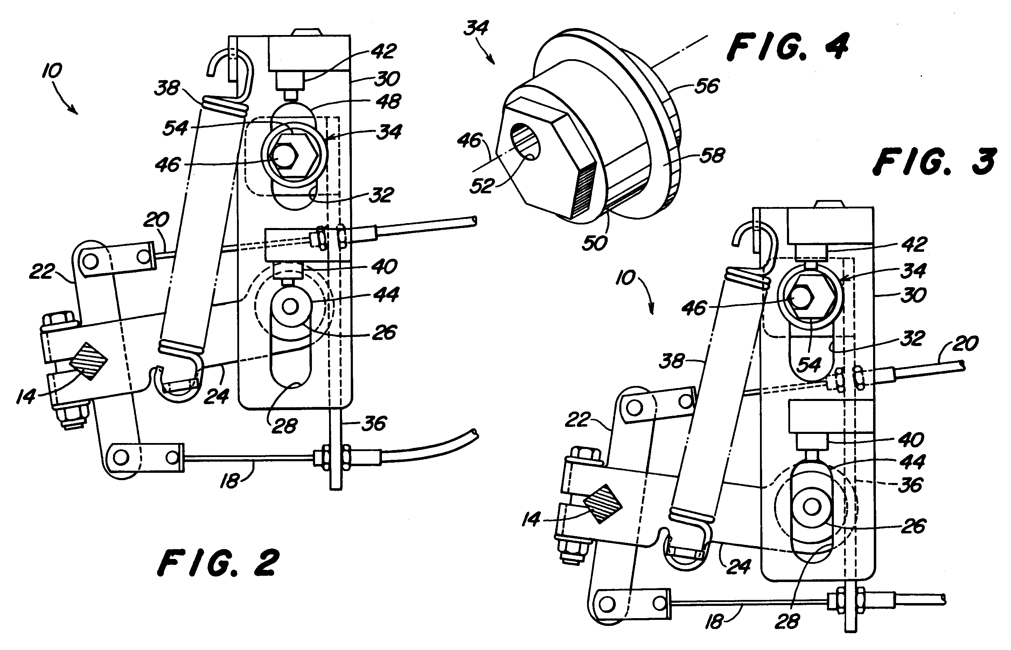

Soll nun das Fahrzeug bei laufendem Motor in Vorwärtsrichtung angefahren werden, so betätigt die Bedienungsperson das Pedal 16 für Vorwärtsfahrt und das Steuergestänge 10 nimmt bei einer bestimmten Vorwärtsgeschwindigkeit die in Fig. 2 gezeigte Stellung ein. Im einzelnen wird bei einem Heruntertreten des rechten Pedals 16 der Kabeldraht in dem Bowdenzug 18 mit Bezug auf Fig. 1 nach vorne gezogen und der Stellhebel 22 verschwenkt entgegen dem Uhrzeigerdrehsinn. Gleichzeitig wird die Steuerwelle 14 entgegen dem Uhrzeigerdrehsinn gedreht und das Getriebe nimmt seine Stellung bzw. Drehrichtung für Vorwärtsfahrt ein. Bei einem Verschwenken der Steuerwelle 14 oder des Stellhebels 22 entgegen dem Uhrzeigerdrehsinn wird auch der erste Schwenkarm 24 entgegen dem Uhrzeigerdrehsinn verstellt, wobei der erste Führungszapfen 26 sich aus seiner in Fig. 1 dargestellten Stellung nach oben bewegt und den zweiten Schwenkarm 30 auf dem zweiten Führungszapfen 34 nach oben schiebt, weil er dabei gegen das obere Ende 44 des ersten Langloches 28 anliegt. Die Höhenverstellung des zweiten Schwenkarms 30 wird durch die Länge des zweiten Langloches 32 bestimmt, da der zweite Führungszapfen 34 ortsfest angeordnet ist. Sobald die Steuerwelle 14 oder der Stellhebel 22 oder der erste Schwenkarm 24 sich aus den in Fig. 1 gezeigten Stellungen entgegen dem Uhrzeigerdrehsinn zu drehen beginnen, entfernt sich der zweite Schalter 42 von dem zweiten Führungszapfen 34, das Getriebe wird in eine Drehrichtung für Vorwärtsfahrt geschaltet und die Zugfeder 38 beginnt sich zu spannen. Bei einem weiteren Verschwenken entgegen dem Uhrzeigerdrehsinn, was bei einem noch weiter Heruntertreten des rechten Pedals 16 erfolgt, wird die Fahrgeschwindigkeit erhöht und die Feder 38 noch mehr gespannt, wobei das zweite Langloch 32 eine Länge haben sollte, die auf den Stellweg des rechten Pedals 16 abgestimmt ist. Sobald die Bedienungsperson aber ihren Fuß von dem rechten Pedal 16 nimmt, wird die Feder 38 den ersten und den zweiten Schwenkarm 24 und 30 in die in Fig. 1 gezeigte Stellung zurückführen. Die Zugfeder 38 ist derart angeordnet, daß sie in der Neutralstellung bestrebt ist, das mit dem ersten Führungszapfen 26 versehene Ende des ersten Schwenkarms 24 in Richtung auf den oberen Bereich des zweiten Schwenkarms 30 zu ziehen. Derartige Bewegungen der beiden Schwenkarme werden aber durch den ortsfesten zweiten Führungszapfen 34 und dem Abstand zwischen den oberen Enden der Langlöcher 28 und 32 begrenzt.

Möchte die Bedienungsperson nun rückwärts fahren, so muß sie das linke Pedal 17 für Rückwärtsfahrt betätigen. Bei einer bestimmten Rückwärtsgeschwindigkeit nimmt das Steuergestänge 10 dann eine in Fig. 3 gezeigte Stellung ein. Im einzelnen wird bei einem Betätigen des linken Pedals 17 der Kabeldraht im Bowdenzug 20 mit Bezug auf Fig. 1 nach vorne oder nach rechts verstellt, so daß der Stellhebel 22 und die Steuerwelle 14 sich im Uhrzeigerdrehsinn verstellen. Das Verstellen der Steuerwelle 14 aus der Neutralstellung im Uhrzeigerdrehsinn stellt die Drehrichtung des hydrostatischen Getriebes in eine für Rückwärtsfahrt um. Durch das Heruntertreten des linken Pedals 17 wird auch der erste Schwenkarm 24 im Uhrzeigerdrehsinn und damit auch der erste Führungszapfen 26 nach unten verstellt. Der Führungszapfen 26 löst sich von dem zugehörigen Schalter 40 und bewegt sich in dem ersten Langloch 28 im zweiten Schwenkarm 30 nach unten. Der zweite Schwenkarm 30 wird dabei durch den zweiten Führungszapfen 34 gehalten und ändert seine Höhenlage nicht, auch wenn er leicht im Uhrzeigerdrehsinn schwenkt. Durch die Drehbewegung im Uhrzeigerdrehsinn oder nach unten des ersten Schwenkarms 24 wird aber die Zugfeder 38 wieder gespannt, so daß, wenn die Bedienungsperson das linke Pedal 17 wieder in seine Ausgangslage zurückkehren läßt, die Feder 38 den ersten Schwenkarm 24 in seine Neutralstellung gemäß Fig. 1 zurückführt. Die Länge des ersten Langloches 28 ist dabei auf den Stellweg des linken Pedals 17 für die Rückwärtsfahrt abgestimmt. Auf diese Weise ist mit einfachen Mitteln ein Rückführeinrichtung in die Neutralstellung geschaffen, gleichgültig, ob das Getriebe vorher in einer Stellung für Vorwärtsfahrt oder in einer Stellung für Rückwärtsfahrt war.

Gleichfalls ist es bei dem bevorzugten Ausführungsbeispiel möglich, das Steuergestänge 10 derart einzustellen, daß stets die Stellung ganz genau aufgefunden wird, in der keinerlei Fahrbetrieb - auch kein Kriechen - möglich ist. Eine solche Stellung ist durch die Stellung der Steuerwelle 14 vorgegeben und ist dadurch erreichbar, daß einer der Führungszapfen einstellbar ausgebildet ist. Bei dem bevorzugten Ausführungsbeispiel ist das der zweite und ortsfest angebrachte Führungszapfen 34. Dieser kann gelockert und um eine exzentrische Schwenkachse 46 etwas nach oben oder nach unten gedreht werden. Da der zweite Führungszapfen 34 in der Neutralstellung nach Fig. 1 gegen das obere Ende 48 des zweiten Langloches 32 anliegt, wird dadurch die Stellung des zweiten Schwenkarms 30 verändert, d. h. er wird höher oder tiefer gesetzt. In der Neutralstellung wird aber auch der erste Schwenkarm 24 aufgrund der Feder 38 mit seinem ersten Führungszapfen 26 gegen das obere Ende 44 des Langloches 28 gezogen, so daß bei einer Verstellung des zweiten Schwenkarms 30 auch der erste Schwenkarm 24 etwas nach oben oder unten schwenkt und dabei die Steuerwelle 14 entsprechend mitverstellt. Auf diese Weise kann das Gestänge 10 in einfacher Weise so eingestellt werden, daß es bei unbetätigten Pedalen 16 und 17 die Steuerwelle 14 in ihre Neutralstellung zurückführt bzw. hält.

Im Rahmen der Erfindung kann anstelle des zweiten Führungszapfens 34 auch der erste Führungszapfen 26 einstellbar ausgebildet sein. Je nach den Gegebenheiten können auch beide Führungszapfen einstellbar sein.

Das Steuergestänge 10 ist darüber hinaus derart ausgebildet, daß das Fahrzeug nur dann angelassen werden kann, wenn sich das hydrostatische Getriebe 12 in seiner Neutralstellung befindet. Dies wird im wesentlichen durch die beiden Schalter 40 und 42 erreicht, die auf dem zweiten Schwenkarm 30 aufsitzen. Über den ersten und den zweiten Schalter 40 und 42 läßt sich feststellen, ob sich der erste oder der zweite Führungszapfen 26 oder 34 von ihren jeweiligen Stellungen an den oberen Enden 44, 48 der Langlöcher 28 und 32 fortbewegt haben. Nur in der vorschriftsmäßigen Neutralstellung des Steuergestänges 10 befinden sich die beiden Führungszapfen 26 und 34 in ihren Stellungen an den oberen Enden 44, 48 der Langlöcher 28 und 32 und liegen gegen die Schaltelemente der Schalter 40 und 42 an. Verläßt einer der Führungszapfen 26 oder 34 seine Stellung an dem oberen Ende 44, 48 des zugehörigen Langloches 28, 32, so bedeutet dies, daß sich das hydrostatische Getriebe 12 nicht mehr in seiner Neutralstellung befindet, sondern in einer Stellung für Vorwärts- oder Rückwärtsfahrt. Die Schalter 40 und 42 sind mit dem Startkreis des Anlassers derart verdrahtet, daß das Fahrzeug nicht angelassen werden kann, wenn einer der beiden Führungszapfen 26, 34 nicht mehr gegen das Schaltelement seines zugehörigen Schalters 40, 42 anliegt. Eine Bedienungsperson kann damit das Fahrzeug nicht anlassen, wenn sich das Getriebe nicht in seiner Neutralstellung befindet.

Die in Fig. 1 erkennbaren Pedale 16 und 17 für Vorwärts- und Rückwärtsfahrt sind an die sich gegenüberliegenden Enden des Stellhebels 22 angeschlossen und bewirken, wenn sie betätigt werden, bei dem bevorzugten Ausführungsbeispiel ein Verdrehen der Steuerwelle 14 entgegen dem Uhrzeigerdrehsinn, wenn das Fahrzeug vorwärts gefahren werden soll, und ein Verdrehen der Steuerwelle im Uhrzeigerdrehsinn, wenn das Fahrzeug rückwärts gefahren werden soll. Im einzelnen ist das Pedal 16 für die Vorwärtsfahrt an das untere Ende des Stellhebels 22 und das Pedal für Rückwärtsfahrt an das obere Ende des Stellhebels 22 angeschlossen. Jedoch kann im Rahmen der Erfindung die Steuerwelle für eine Vorwärtsfahrt im Uhrzeigerdrehsinn und für eine Rückwärtsfahrt entgegen dem Uhrzeigerdrehsinn verschwenkt werden. In einem solchen Fall wäre das Pedal 16 für Vorwärtsfahrt mit dem oberen Ende des Stellhebels 22 und das Pedal 17 für Rückwärtsfahrt mit dem unteren Ende des Stellhebels zu verbinden.

In Fig. 4 ist der einstellbare Führungszapfen 34 in einem vergrößerten Maßstab dargestellt. Man erkennt, daß in dem Körper 50 des Führungszapfens 34 eine exzentrische Bohrung 52 eingearbeitet ist, durch die eine aus den Fig. 1 bis 3 ersichtliche Schraube 54 gesteckt werden kann, um den Körper 50 mit der feststehenden Platte 36 verschrauben zu können. Bei angezogener Schraube 54 wird der Körper 50 gegen die Platte 36 gepreßt, so daß der Körper infolge eines Reibschlusses in der gewählten Stellung gehalten wird. In den zweiten Langloch 32 ist der Körper 50 durch eine Ringschulter 56 geführt, die einen etwas kleineren Durchmesser als ein darüberliegender Halteteil 58 aufweist. Das zweite Langloch 32 ist damit auf der Ringschulter 56 verschiebbar, wobei der Halteteil 58 einen Durchmesser aufweist, der größer ist als das zweite Langloch 32 breit ist, und bei angezogener Schraube 54 dazu dient, den zweiten Schwenkarm 30 in seiner richtigen Lage gegenüber der Platte 36 zu halten. Soll nun die eingestellte Stellung des Führungszapfens 34 geändert werden, so wird die Schraube 54 gelockert und die Bedienungsperson kann den Körper 50 um die durch die Schraube bestimmte Schwenkachse 46 in eine neue Stellung drehen. Das Verdrehen des Körpers 50 bedeutet, daß der Führungzapfen 34 mit Bezug auf seine Stellung in Fig. 1 in eine etwas höher oder etwas tiefer gelegene Position verstellt wird. In der neuen Position wird der Körper durch ein Anziehen der Schraube 54 fest gegen die Platte 36 gehalten. In der Neutralstellung aber auch in der Stellung für Rückwärtsfahrt hängt der zweite Schwenkarm 30 mit seinem zweiten Langloch 32 auf der Ringschulter 56 des zweiten Führungszapfens 34. Auf diese Weise bestimmt die neue Stellung des zweiten Führungszapfens 34 die neue Neutralstellung des zweiten Schwenkarms 30. In der neuen Neutralstellung hat sich der zweite Schwenkarm 30 etwas aus seiner in Fig. 1 gezeigten Stellung nach oben oder nach unten in Abhängigkeit von der neuen Stellung des zweiten Führungszapfens 34 verstellt. Da die Feder 38 auch in der neuen Neutralstellung des zweiten Schwenkarms 30 den ersten Schwenkarm 24 mit seinem Führungszapfen 26 gegen das obere Ende des ersten Langloches 28 zieht, verändert sich auch die Stellung des ersten Schwenkarms 24 und schließlich die Stellung der Steuerwelle 14. In jedem Fall muß die Steuerwelle 14 in der Neutralstellung des hydrostatischen Getriebes 12 eine Stellung einnehmen, in der auch ein sogenanntes Kriechen des Getriebes 12 ausgeschlossen ist. Da die beiden Schalter 40 und 42 unmittelbar auf dem zweiten Schwenkarm 30 angeordnet sind, erübrigt sich deren gesonderte Einstellung, wenn der zweite Führungszapfen 34 verstellt wird, da sie dann mit dem zweiten Schwenkarm verstellt werden.

## Patentansprüche

1. Hydrostatisches Getriebe für ein Fahrzeug, das über eine Steuerwelle (14) aus einer Neutralstellung in eine Stellung für Fahrt in eine Richtung und in eine Stellung für Fahrt in die entgegengesetzte Richtung schaltbar ist und ein Steuergestänge (10) aufweist, über das das Getriebe (12) aus seinen Fahrtstellungen in seine Neutralstellung rückführbar ist, wobei das Steuergestänge (10) einen ersten mit der Steuerwelle (14) verbundenen Schwenkarm (24), einen zweiten zu dem ersten Schwenkarm (24) in einem Winkel angeordneten Schwenkarm (30) mit einem ersten und einem zweiten Langloch (28, 32), einem ersten an dem ersten Schwenkarm (24) vorgesehenen und in dem ersten Langloch (28) geführten Eingreifteil (26), einen zweiten fahrzeugfesten und den zweiten Schwenkhebel (30) in dem zweiten Langloch (32) führenden Eingreifteil (34) und ein den ersten und den zweiten Schwenkarm (24, 30) derart verbindendes Federelement aufweist, daß das Steuergestänge (10) in der Neutralstellung eine Stellung, in der der erste und der zweite Eingreifteil (26, 34) an den Enden (44, 48) des ersten und zweiten Langloches (28, 32) anliegt, in der Stellung für Fahrt in die eine Richtung eine Stellung, in der der erste Eingreifteil (26) von dem Ende (44) des zugehörigen ersten Langloches (28) weggeschwenkt und in der der zweite Eingreifteil (34) gegen das Ende (48) des zugehörigen zweiten Langloches (32) anliegt, und in der Stellung für Fahrt in die entgegengesetzte Richtung eine Stellung einnimmt, in der der erste Eingreifteil (26) gegen das Ende (44) des zugehörigen ersten Langloches (28) anliegt und in der der zweite Eingreifteil (34) nicht mehr gegen das Ende (44) des zugehörigen zweiten Langloches (32) anliegt, dadurch gekennzeichnet, daß der zweite Schwenkarm (30) mit einem ersten und einem zweiten Schalter (40, 42) versehen ist, die mit der Fahrzeugelektrik derart verbunden sind, daß ein Anlassen des Fahrzeuges nur möglich ist, wenn der erste und der zweite Eingreifteil (26, 34) gegen die Enden des zugehörigen ersten und zweiten Langloches (28, 32) anliegt.

2. Getriebe nach Anspruch 1, dadurch gekennzeichnet, daß die Schalter (40, 42) als Druckschalter ausgebildet und durch die Eingreifteile (26, 34) betätigbar sind.

3. Getriebe nach Anspruch 1 und 2, dadurch gekennzeichnet, daß einer der Eingreifteile (26 oder 34) einstellbar ist.
